# EUROPEAN PATENT APPLICATION

(11) **EP 4 642 006 A1**
(43) Date of publication of application: **29.10.2025**
(21) Application number: 25170860.8
(22) Date of filing: 16.04.2025
(51) Int. Cl.: H04L 65/1016, H04L 65/1069, H04L 65/401

(54) **5G NEW CALLING ESTABLISHMENT METHOD THROUGH SYNCHRONIZED MINI-APPS**

(30) Priority: 25.04.2024 WO PCT/CN2024/089798
(71) Applicant: Orange, 92130 Issy-les-Moulineaux (FR)
(72) Inventor: HAN, Liang, BEIJING 100013 (CN); XU, Xiaoyan, BEIJING 100013 (CN)
(74) Representative: Regimbeau

(57) **Abstract**

Method for a caller device to establish a call with a called device, comprising:
- detecting (S0) a call to said called device;
- placing (S1) an IMS call session and establishing a data channel;
- downloading (S2) specific applications (A2, A2') to the caller device (UE-A) and called device (UE-B);
during the IMS call session, monitoring (S4) interactions with said caller and called devices, and if an interaction is detected (S5), transmission (S6), from this device to the other device, of synchronization information reflecting the interaction through the data channel.

## Description

### TECHNICAL FIELD

The invention relates to a method for a caller device to establish a call with a called device, within an IMS (IP Multimedia Subsystem) context. In particular, the invention relates to a method for a caller to establish a call in connection with an application running on the caller device, more particularly in the situation where the called device is associated with a support service for this application.

### BACKGROUND OF THE INVENTION

The convergence between the evolutions of the IP Multimedia subsystem (IMS) infrastructure and of 5G telecommunications networks enables new functionalities, like the so-called 5G New Calling (5GNC) solution, which was unveiled during the MWC Shanghai in 2021.

By harnessing 5G networks and new technologies, such as artificial intelligence and augmented reality, 5GNC supports innovative, user-friendly, and convenient call enhancements and applications.

In particular, 5GNC proposes a new data channel established between call parties, enabling support for these call enhancements. This data channel complies with the IMS standards and is defined in 3GPP TS 26.114.

The "IMS Data Channel White Paper", NG 129, version 1.0, published by the GSMA (GSM Association) provides several use cases and technical guidance regarding this IMS data channel-powered 5GNC.

When a caller device, or "user equipment" (UE), wishes to establish a call with a called device, UE, using IMS infrastructure, it may then make use of the 5GNC facilities to get a wide set of new functionalities to enhance the call. The examples provided in the white paper stress the possibility to trigger visual interactions between parties, triggered at establishment of a call or while the call is already established.

In case, a user wishes to establish a call in connection with an application running on his/her device, 5GNC provides him/her with the technical possibility to trigger an interactive call through the data channel to share about his/her experience with the application.

For instance, in the situation where the called device is associated with a support service for this application, 5GNC may be used to initiate screen sharing, as suggested by the White Paper, section 6.1.

However, screen sharing may not be sufficiently convenient in situations where the called party may need to interact with the application as well.

Furthermore, screen sharing uses video streaming, which generates high levels of bandwidth consumptions for the telecommunication networks, and for the support service provider. It thus contributes to the increase of the global load of telecommunications networks and has an important impact on ecological and energy-consumption concerns.

In addition, from a user perspective, the requirements for higher levels of bandwidth may imply additional costs, and in case of overload of the network or of the service provider's equipment, the screen sharing operation may suffer from jitter or latency, jeopardizing the user experience.

In other situations, establishing the call would not be sufficient, and both parties may be required to interact in order to decide on downloading a piece of software application in order to improve their experience.

There is therefore a strong need to improve the existing solutions making use of 5GNC for establishing a call between.

### SUMMARY OF THE INVENTION

An object of the present invention aims in alleviating at least partly the above-mentioned drawbacks.

This object is achieved with a method for a caller device to establish a call with a called device over a telecommunication network, comprising:
- detecting a call to said called device;
- placing an IMS call session with said called device and establishing a data channel;
- downloading a first specific application to said caller device (UE-A) and a second specific application to said called device;
- during said IMS call session, monitoring interactions with said caller and called devices, and if an interaction is detected at one among said devices, transmission, from said device to the other device, of synchronization information reflecting said interaction through said data channel

Preferred embodiments comprise one or more of the following features, which can be taken separately or together, either in partial combination or in full combination.
- said call relates to a triggering application running on said caller device, and further comprising:
   - passing state information from said triggering application to said first and second specific applications,
   - during said IMS call session, monitoring interactions with said caller and called devices comprises monitoring interactions with said first and second specific applications.
- said first and second specific applications are selected according to at least an identifier of said called device.
- said state information comprises a page identifier and a session identifier.
- passing state information from said triggering application to said first and second specific applications comprises transmitting said state information from said caller device to said callee device through said data channel.
- said called device is associated with a support service for said triggering application.
- said transmission of synchronization information is transmitted only when a security criterion is met.
- said interactions relate to interactions performed by a user

Another aspect of the invention relates to a caller device adapted for establishing a call with a called device over a telecommunications network, comprising:
- a telecommunication service adapted for detecting a call to said called device, placing an IMS call session with said called device and establishing a data channel, and downloading a first specific application;
- a monitoring service for monitoring interactions with said caller device and, if an interaction is detected, transmitting synchronization information reflecting said interactions to said called device, through said data channel.

According to some embodiments, the caller device is further adapted for running a triggering application; passing state information from said triggering application to said first and second specific applications, and the monitoring service is adapted for monitoring interactions with said first specific application.

Another aspect of the invention relates to a called device adapted for establishing a call with a calling device over a telecommunications network, comprising:
- a telecommunication interface adapted for establishing an IMS call session with said caller device and establishing a data channel, and downloading a second specific application;
- a monitoring service for monitoring interactions with said called device and, if an interaction is detected, transmitting synchronization information reflecting said interactions to said caller device through said data channel.

According to some embodiments, the called device is further adapted for:
- passing state information received from said data channel to said second specific application; and the monitoring service is adapted for monitoring interactions with said second specific application;
- having said monitoring service further adapted for, when receiving synchronization information through said data channel, reflecting said synchronization information to the respective first or second specific application.

Another aspect of the invention concerns a system comprising at least one caller device as previously defined and at least one called device as previously defined.

Another aspect of the invention relates to a computer program comprising code instructions for executing a method as previously defined, when run onto a computer.

Further features and advantages of the invention will appear from the following description of embodiments of the invention, given as non-limiting examples, with reference to the accompanying drawings listed hereunder.

### BRIEF DESCRIPTION OF THE DRAWINGS

Figure 1 illustrates a flowchart according to embodiments of the proposed method.
Figure 2 illustrates a data channel architecture according to embodiments.
Figure 3 illustrates an example of functional architecture of a caller device and of a called device.

### DETAILED DESCRIPTION OF EMBODIMENTS

The proposed method aims in enabling a caller device to establish a call with a called device.

Caller (or calling) device and callee device may comprise any apparatus adapted for establishing a call over telecommunications network, and in particular for placing an IMS call session. So, any apparatus adapted for communicating through IMS architecture may be such a caller and/or callee device.

It encompasses in particular mobile phones, including smartphones, digital tablets, etc., laptop or desktop computers, telecommunication-enabled IoT (Internet of Things) apparatuses, etc.

According to embodiments, the call is established in connection with an application running on the caller device. As this application would trigger the call establishment, this application may be called "triggering application".

In other words, a possible scenario concerns a user of the caller device willing to establish a call while using the triggering application. This call relates to this application for some purpose (sharing experiences, requiring support, etc.). S/he intends then to share some data associated with this triggering application during the call with a called party.

The connection between the call and the application concerns the mere fact that some data about the application shall be shared somehow during the call, or, still in other words, that the purpose of the call comprises an operation of the application.

In particular, the user may face some difficulties in some operation with the application and is looking for help from a third party.

In such a situation, the called device corresponding to this third party may be associated with a support service for this triggering application. But it may also be the device of anybody else (friends, family member...) with whom the user wants to share experiences with the triggering application, for support, help or for any other reasons.

A typical scenario may relate to a bank application. A user is using a bank application on his/her mobile phone and does not know (or is not sure) how to handle a complex operation. S/he then calls (using the same mobile phone) the bank's customer service to get some guidance about to perform this operation on the bank application.

Another scenario may relate to a user who wishes to establish a call with a service like a restaurant, a transportation company, a doctor, etc. Although not connected with a triggering application running on the caller device, this call may trigger some specific actions of the proposed method.

The proposed method may therefore apply in different contexts and allows various embodiments and possibilities enhancing the user experience with 5G mobile telephony.

In particular, the proposed method comprises steps for:
- placing an IMS call session with the called device and establishing a data channel;
- downloading a first specific application to the caller device and a second specific application to said called device, these two applications being potentially a same application (or precisely two instances of a same application); and
- during the IMS call session, monitoring interactions with said caller and called devices, and if an interaction is detected at one among said devices, transmission, from this device to the other device, of synchronization information reflecting this interaction through the previously-established data channel.

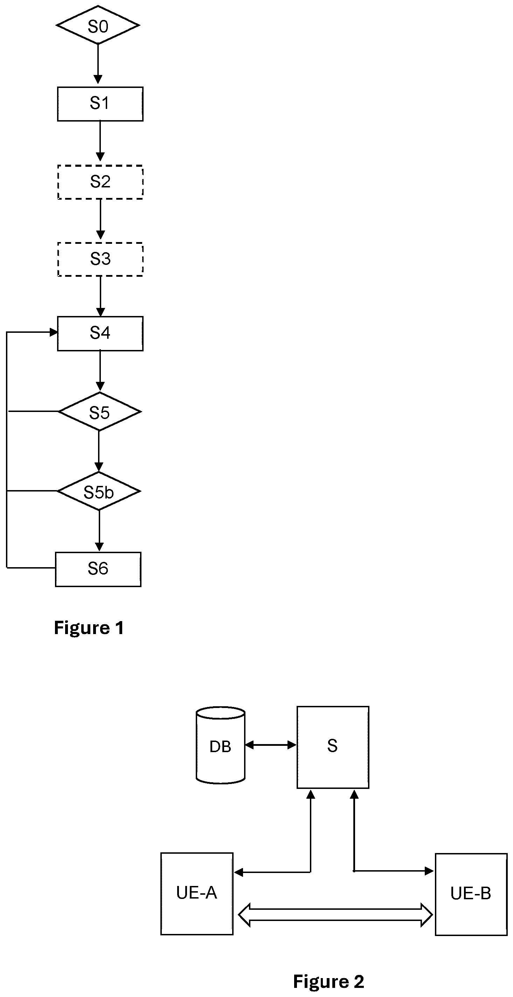

The figure 1 depicts a flowchart illustrating several embodiments of a proposed method for handling a call between a callee party and a called party.

The method comprises a step S0 of detecting a call to said called device. This step S0 may comprise determining whether the call meets some determined criteria: only if these criteria are met, then the subsequent steps of the proposed method would be triggered.

These criteria may refer to certain actions undertaken by the user (like clicking on a dedicated item of the InCallUI user interface displayed on the caller device). The criteria may also refer to an identifier of the called device. Some identifiers may be registered within the network operator's servers for automatically triggering the proposed method.

As mentioned earlier, some embodiments concern a call established in connection with a (triggering) application. The coexistence of this triggering application that is running on the device when a call is initiated my constitute such criteria.

Other embodiments are also possible and accessible to the skilled person, in particular in view of upcoming evolutions of the 5G telephony standards.

Then, the method comprises a step S1 consisting in placing an IMS call session with the called device and establishing a data channel. This data channel may comply with the current 3GPP specifications, including 3GPP TS 26.114 entitled "IP Multimedia Subsystem (IMS); Multimedia Telephony; Media handling and interaction".

Section 6.2.10 of this document (version 16.6.1, dated 2020-09) specifies the data channels from a technical perspective.

Accordingly, the caller device and the called device comprises appropriate telecommunication interfaces adapted for placing or establishing an IMS call session with the other party and establishing a data channel between them.

The proposed method comprises a step S2 of downloading a first and second specific applications to both, respectively, the caller device and the called devices. These two applications, once downloaded, may be automatically started.

According to some embodiments, the downloading of the specific applications is triggered by an identifier of the called device. This identifier may be representative of a support service, for instance, so that the operating system of the caller device may automatically determine the intention of the user and, accordingly, trigger the downloading of the appropriate specific applications (or "mini-app").

According to another embodiment, the user may dial the called device through a specific item (button...) of the interface of the triggering application. The triggering application may then be adapted to automatically trigger, through the underlying operating system, the downloading of the appropriate mini-apps from the data channel.

Figure 2 shows a data channel architecture.

The data channel functions in 5G are placed in a new IMS logical entity, called the Data channel server (DCS), S. The data channel server S collaborates with a data channel application repository DB where applications (sometimes called "mini-app") are stored. These applications may be developed and provisioned into the repository DB by an entity different than the entity managing the IMS infrastructure.

In particular, the owner of the triggering application may provision one or two "companion" mini-apps into this repository DB. As an example, a bank providing users with a bank application for their devices may also provide a companion mini-app and provision it into the data channel application repository.

According to some embodiments, a same specific application (or mini-apps) is downloaded to the caller and called devices.

However, in other embodiments, different specific applications may be downloaded to the two devices. This may because the devices are of different natures (for instance the caller device being a mobile phone under IOS or Android environment, and the called device being a computer under Windows environment), or because the both applications have different functions, like caller-party specific functions and/or called-party specific functions).

In both situations, the first and second specific applications are compatible by design and adapted to interwork.

The way mini-apps are stored and downloaded to IMS call session parties is explained within the 3GPP TS26.114 document in relation with figure 6.2.10.1-1.

Once the IMS call session is established, the caller party UE A also open a data channel to download a first specific application (mini app). In parallel, the reception of the IMS call or the establishment of the IMS call session triggers the downloading of a second specific application at the called party, UE B, side. This second application may be the same as the first application, as explained before.

When provisioned into the data channel application repository DB, an identifier may be assigned to the applications.

So, the devices may trigger the downloading of the appropriate first/second application from the data channel application repository, through the data channel, by requesting it with the associated identifier.

According to embodiments, this identifier is attached with the triggering application. In other words, the triggering application is configured with the identifier of its own "companion" first and second applications, as in most cases they both originates from a same developer and are technically linked.

The devices may identify the applications (aka "mini-apps") to download by different ways.

According to embodiments, the first and second specific applications are selected according to at least an identifier of the called device.

In particular, the identifier of the called party may suffice to identify the mini-app. In another example, a couple "identifier of the called party / identifier of the caller party" could be used for selecting the appropriate applications. In this way, both parties are able to download the appropriate application independently. They are also able to select which of a first or second application they should download based on whether they are a called or a caller device.

When a triggering application provides an identifier for the first and second application, this identifier may be transmitted to the server S at the time the IMS call session is established.

At this step, then, the first and second applications (or mini-apps) may be deployed on each of the caller device and called device.

According to embodiments, the method comprises a step S3 consisting in passing state information from the first application to the first and/or the second specific application.

This step aims in starting the first and second specific applications in a particular state, associated with the state of the triggering application.

According to embodiments, the state of the first application corresponds to the state of the triggering application. If the second application is the same as the first application, it may start with the same state, so that both first and second applications are initially synchronized. If the second application is different than the first application, then, its state may just be determined according to the state information passed from the caller device.

The state information comprises all information that may be required to set the application in a same state. Inputting state information of a previous interaction with an application shall allow the user to restart the application as when s/he quitted this interaction.

In other words, the state of an application refers to the collection of data and information specific to a user or session that is maintained and managed by the application during its operation. This typically includes information such as user preferences, session data, configuration settings, and any other context necessary for the application to function correctly for a given user. It also encompasses login/authentication status, for instance. These aspects are accessible to the skilled person used to develop applications on mobile photos or other digital devices.

In case the application is a web application, the state application may be determined by the URL (Unified Resource Locator). In such a case, the state information may comprise a page identifier and a session identifier or token.

The page identifier can identify which page of the application is to be opened, and the session identifier may identifier the user who has logged in. The latter may allow retrieving dynamic data from a database to fill the identified page up, for instance. In such an embodiment, the couple page identifier + session identifier is sufficient to univocally determine the content to be displayed.

In the example of a bank application, a page identifier may identify the current page, like
"www.mybank.com/transaction_page"

This URL contains a page ("transaction_page") in the set of pages constituting the application.

The session identifier comprises any data specifying the state of the application on top of the page identifier. This session identifier is usually encoded as a character's string.

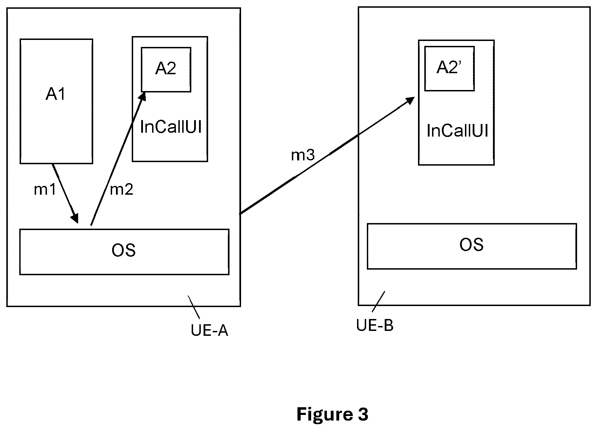

Figure 3 illustrates an example of functional architecture of a caller device, UE A and of a called device UE B.

Each device, UE-A, UE-B, comprises an operating system, OS, or system service. Such system may comprise several layers ranging from the core system to middleware. In the context of the proposed method, these layers do no need to be further detailed, since device software architecture is known in the art.

In this example, a triggering application A1 is deployed over the system service OS. However, the proposed method can apply when no such triggering application is running.

According to embodiments, before placing the IMS call session, the system service gets the state information from this triggering application, arrow m1.

Then, once the first, A2, and second, A2', specific applications are downloaded in the, respectively, caller device UE-A, and callee device UE-B, the state information retrieved from the triggering application A1 is provided to both first and second specific applications, A2, A2'.

According to embodiments, the first and second application sA2, A2' may be deployed within the InCallUI ("In Call User Interface"), which represents the user interface managed by the operating system/system service when a call is ongoing.

More precisely, according to embodiments, the first and second specific applications may be displayed on the caller device on top of the call dialer' screen, or, at its side, depending on the size of the screen, of the orientation of the device and/or of user's configurations. The triggering application A1 may not be displayed while the IMS call session is ongoing. The interface may allow the user to swipe the screen to see and interact with the first and second applications (or mini-apps).

The system service OS may then pass the state information locally to the first specific application A2 deployed on the same caller device, arrow m2 in figure 3.

Also, the state information is transmitted to the callee device through the data channel (previously installed), arrow m3 in figure 3.

Thanks to the state information, both first and second applications can start with the appropriate state. As explained earlier, when the first and second specific applications are a same application, they may be synchronized to a same state. This state may correspond to the state of the triggering application at the time the user triggered the call to the callee device. In other words, according to this embodiment, the called device deploys a specific application A2' which has the same state as the triggering application A1 at caller end.

Accordingly, the user of the called device can understand any issues the calling user may have experiences with the triggering application. Through the IMS call session, the user can also undertake voice chat and/or videoconference to address the issue. In this way, the called user (e.g. a support service) may understand the situation of the calling user.

In order to help him/her, s/he may however need to have further interactions with the caller device of the caller user.

The proposed method comprises a step S4 comprising the monitoring of interactions with the caller device, UA-A, et the called device UA-B.

In particular and according to embodiments, this monitoring comprises monitoring interactions with the first and second specific application, A2, A2'.

These interactions may comprise any actions, including actions from a user of the called or caller device, modifying a state of the first or second specific applications. According to embodiments, any actions on an item of the human-machine interface of the respective specific application may also be captured as "interactions".

The data channel is used for synchronizing the state of the two devices with regard to both specific applications A2, A2'.

In other words, when an interaction is detected at one device, synchronization information is transmitted to the other device through the data channel in order to synchronize the specific applications (or mini apps) together.

So, a continuous monitoring may be put in place, iteratively testing, at step S5, whether a condition is met to trigger the transmission, step S6, of synchronization information. This continuous monitoring and synchronizing are reflected in figure 2 by the loop linking step S6 to step S4.

This synchronization information is intended to reflect the interactions with the specific applications.

The synchronization data may comprise similar data than the state information initially passed at step S3. In particular, the synchronization data may comprise all data enabling the receiving specific application to modify its own state to the state of the emitting specific application. For instance, the synchronization data may comprise a page identifier and a session identifier, or token.

If the user activates an item of the human-machine interface of the specific application, data relating to this activation, or event (item identifier, etc.) may also be transmitted as synchronization information, so that the same activation is operated at the other specific application.

To summarize, the synchronization information may be adapted for allowing a user to see a specific application operates as if s/he were seeing the other specific application operated remotely by another user. Thanks to low-latency and other QoS parameters associated with the data channel, these operations may be reflected in real-time or nearly in real-time.

So, both users can undertake a voice or a video call, while interacting through two synchronized specific applications. In case a first user is seeking help from a second user, the second user may show some actions by interacting with his own specific application, these interactions being reflected to the specific application of the first user: s/he may then educate this first user and show him/her ways to proceed while explaining orally or visually through the vocal/video channel. The support service may show hints or guidance to the caller device's user.

According to embodiments, another criterion may be required to be fulfilled, at step S5b, in order to trigger the transmission of synchronization information. This criterion may be a security criterion.

For instance, the user may, temporarily (or definitively) stop the synchronization mechanism, so that no more synchronization information will be transmitted to the other party. Such a feature may be useful when the user is prompter to enter confidential information, for instance, like a login, a password and the like.

This mechanism may also be automatically triggered when, for instance, a specific tag is present in a state of the specific application (for example, if a page comprises a "private" flag, etc.)

For example, when a first user, using a caller device UE-A, seeks support from a second user using a called device UE-B, s/he may be guided by the latter until a state is reached, where s/he is prompted to enter authentication data. At this step, s/he may decide to switch to a proxy mode (or this switch is automatically performed), where his/her interactions are not synchronized with the remote party (no more transmission of synchronization data from his/her side). However, interactions from the second user may be reflected to the first device. So, the synchronization may be kept in one way, but not full duplex. The user may revert to the previous synchronization mode, once the authentication is performed, or, again, automatically (for example, because the new page does not contain any tag disabling the synchronization mode).

The invention has been described with reference to preferred embodiments. However, many variations are possible within the scope of the invention.

## Claims

1. Method for a caller device to establish a call with a called device over a telecommunication network, comprising:
- detecting (S0) a call to said called device;
- placing (S1) an IMS call session with said called device and establishing a data channel;
- downloading (S2) a first specific application (A2) to said caller device (UE-A) and a second specific application (A2') to said called device (UE-B);
- during said IMS call session, monitoring (S4) interactions with said caller and called devices, and if an interaction is detected (S5) at one among said devices, transmission (S6), from said device to the other device, of synchronization information reflecting said interaction through said data channel.

2. Method according to claim 1, wherein said call relates to a triggering application (A1) running on said caller device (UE-A), and further comprising:
- passing (S3) state information from said triggering application (A1) to said first and second specific applications,
- during said IMS call session, monitoring (S4) interactions with said caller and called devices comprises monitoring interactions with said first and second specific applications.

3. Method according to the previous claim, wherein said first and second specific applications are selected according to at least an identifier of said called device.

4. Method according to any of claims 2 and 3, wherein said state information comprises a page identifier and a session identifier.

5. Method according to any of the claims 2 to 4, wherein passing state information from said triggering application to said first and second specific applications comprises transmitting said state information from said caller device to said callee device through said data channel.

6. Method according to any of the claims 2 to 5, wherein said called device is associated with a support service for said triggering application.

7. Method according to any of the previous claims, wherein said transmission of synchronization information is transmitted only when a security criterion is met (S5b).

8. Method according to any of the previous claims, wherein said interactions relate to interactions performed by a user.

9. Caller device (UE-A) adapted for establishing a call with a called device (UE-B) over a telecommunications network, comprising:
- a telecommunication service adapted for detecting a call to said called device, placing an IMS call session with said called device and establishing a data channel, and downloading a first specific application;
- a monitoring service for monitoring interactions with said caller device and, if an interaction is detected, transmitting synchronization information reflecting said interactions to said called device, through said data channel.

10. Caller device (UE-A) according to the previous claim, further adapted for
- running a triggering application (A1);
- passing state information from said triggering application to said first and second specific applications, and
- wherein said monitoring service is adapted for monitoring interactions with said first specific application (A2).

11. Called device (UE-B) adapted for establishing a call with a calling device (UE-A) over a telecommunications network, comprising:
- a telecommunication interface adapted for establishing an IMS call session with said caller device and establishing a data channel, and downloading a second specific application (A2');
- a monitoring service for monitoring interactions with said called device and, if an interaction is detected, transmitting synchronization information reflecting said interactions to said caller device through said data channel.

12. Called device (UE-B) according to the previous claim, further adapted for
- passing state information received from said data channel to said second specific application (A2'); and
- wherein said monitoring service is adapted for monitoring interactions with said second specific application (A2').

13. Caller device (UE-B) according to claim 10 or called device according to claim 12, wherein said monitoring service is further adapted for, when receiving synchronization information through said data channel, reflecting said synchronization information to the respective first or second specific application (A2, A2').

14. System comprising at least one caller device (UE-A) according to claim 9 and at least one called device (UE-B) according to claim 11.

15. Computer program comprising code instructions for executing a method according to any one of claims 1 to 8.
